# EUROPEAN PATENT APPLICATION

(11) **EP 2 101 491 A1**
(43) Date of publication of application: **16.09.2009**
(21) Application number: 09003311.9
(22) Date of filing: 06.03.2009
(51) Int. Cl.: H04N 5/445, H04N 5/44

(54) **Broadcast receiving apparatus**

(30) Priority: 13.03.2008 JP 2008063997
(71) Applicant: VICTOR COMPANY OF JAPAN, LTD., Yokohama 221-0022 (JP)
(72) Inventor: Enomoto, Yoshimi, Yokohama-shi Kanagawa-ken (JP)
(74) Representative: Manitz, Finsterwald & Partner GbR

(57) **Abstract**

In a broadcast receiving apparatus, a first picture is indicated. The first picture contains a list of channels, a genre selecting button, and a favourite registering button. When the genre selecting button is chosen, a second picture is indicated. The second picture contains a list of genres, the channel list, and the favourite registering button. When one is selected from the genres in the genre list, broadcast signals in the channels in the channel list are sequentially received. Genre information pieces are obtained from the received broadcast signals. The genre information pieces represent genres of content programs broadcasted via the channels. Ones among the channels in the channel list are detected in response to the genre information pieces. The detected channels are those used to broadcast content programs in the selected genre. Predetermined marks are added to regions in the channel list which correspond to the detected channels respectively. When at least one is chosen from the detected channels and the favourite registering button is chosen, the chosen channel is registered with a list of favourite channels.

## Description

### BACKGROUND OF THE INVENTION

### Field of the Invention

This invention generally relates to a broadcast receiving apparatus. This invention particularly relates to a broadcast receiving apparatus having the function of indicating a list of channels which have been registered through a channel search.

### Description of the Related Art

In some areas, both terrestrial analog broadcasting and terrestrial digital broadcasting are available. In some cases, there is at least one pair of a channel in the terrestrial analog broadcasting and a channel in the terrestrial digital broadcasting through which a same content program is simultaneously broadcasted. There are television receivers capable of receiving not only television signals of the terrestrial analog broadcasting but also those of the terrestrial digital broadcasting.

Usually, some of channels in the terrestrial analog broadcasting are used for broadcast while the other channels are not. Similarly, some of channels in the terrestrial digital broadcasting are used while the other channels are not. A known television receiver can make a list of used channels in the terrestrial analog broadcasting and the terrestrial digital broadcasting. Generally, all the channels in the terrestrial analog broadcasting and the terrestrial digital broadcasting are searched for used ones through a channel scanning procedure, and the used channels are registered with the list. The list indicates at least the names of the registered channels. For each pair of a channel in the terrestrial analog broadcasting and a channel in the terrestrial digital broadcasting through which a same content program is simultaneously broadcasted, it is sufficient to register either the analog broadcasting channel or the digital broadcasting channel with the list.

As the number of channels registered with such a channel list increases, it tends to be more difficult for the user to grasp conditions in the list.

Japanese patent application publication number 09-130694 discloses a broadcast receiver in which information about a genre for which retrieval requested by a user has been done many times is stored in a memory, and that genre is labeled as a set genre. The broadcast receiver of Japanese application 09-130694 can display a list of content programs to be broadcasted via channels. Content programs in the same genre as the set genre are discriminated from content programs in other genres. Displayed list portions denoting the content programs in the same genre as the set genre have a color different from that of displayed list portions denoting the content programs in the other genres.

Another known television receiver makes a general list of services and used channels found through a channel scanning procedure, and enables a user to generate a special list of favourite (favorite) channels on the basis of the general list. Usually, registering a new channel with the favourite list is implemented by selecting a command in a channel editing menu on a manual basis.

Registering used channels with the general list through the channel scanning procedure is independent of user's intention. Usually, the user performs registering each desired channel with the favourite list on a manual basis while referring to the general list or checking the contents of broadcast programs assigned to the channel. In the case where the general list is of numerous registered channels, it tends to take a long time for the user to register a channel with the favourite list. Furthermore, it is troublesome for the user to register a channel with the favourite list.

### SUMMARY OF THE INVENTION

It is a first object of this invention to provide a broadcast receiving apparatus which enables a user to easily register a desired channel with a favourite (favorite) list.

It is a second object of this invention to provide a broadcast receiving apparatus which enables a user to easily register a desired channel in analog broadcasting with a favourite list.

A first aspect of this invention provides a broadcast receiving apparatus comprising first means for storing channel information about channels; second means for indicating a first picture on the basis of the stored channel information, the first picture containing a list of the channels, a genre selecting button, and a favourite registering button; third means for indicating a second picture when the genre selecting button is chosen, the second picture containing a list of genres, the list of the channels, and the favourite registering button; fourth means for sequentially receiving broadcast signals in the channels in the channel list and obtaining genre information pieces from the received broadcast signals when one is selected from the genres in the genre list, the genre information pieces representing genres of content programs broadcasted or to be broadcasted via the channels; fifth means for detecting ones among the channels in the channel list in response to the genre information pieces, the detected channels being used to broadcast content programs in the selected genre; sixth means for adding predetermined marks to regions in the channel list, the regions corresponding to the detected channels respectively; and seventh means for, when at least one is chosen from the detected channels in the channel list and the favourite registering button is chosen, registering the chosen channel with a list of favourite channels.

A second aspect of this invention is based on the first aspect thereof, and provides a broadcast receiving apparatus wherein the channels include digital broadcasting channels and analog broadcasting channels, and one of the genres in the genre list is assigned to the analog broadcasting channels. The apparatus further comprises eighth means for, when the genre assigned to the analog broadcasting channels is selected from the genre list, adding predetermined marks to areas in the channel list, the areas corresponding to the analog broadcast channels respectively.

This invention provides the following advantages. It is easy for the user to register, with a favourite list, a channel via which content programs in a genre selected by the user are broadcasted or to be broadcasted. One member of a genre list is assigned to analog broadcasting. Thereby, it is easy for the user to register an analog broadcasting channel or channels with the favourite list.

### BRIEF DESCRIPTION OF THE DRAWINGS

Fig. 1 is a block diagram of a broadcast receiving apparatus according to an embodiment of this invention.
Fig. 2 is a flowchart of a segment of a computer program for a controlling section in Fig. 1.
Fig. 3 is a diagram showing an initial channel-list editing picture indicated by a display section in Fig. 1.
Fig. 4 is a diagram showing a non-initial channel-list editing picture indicated by the display section in Fig. 1.

### DETAILED DESCRIPTION OF THE INVENTION

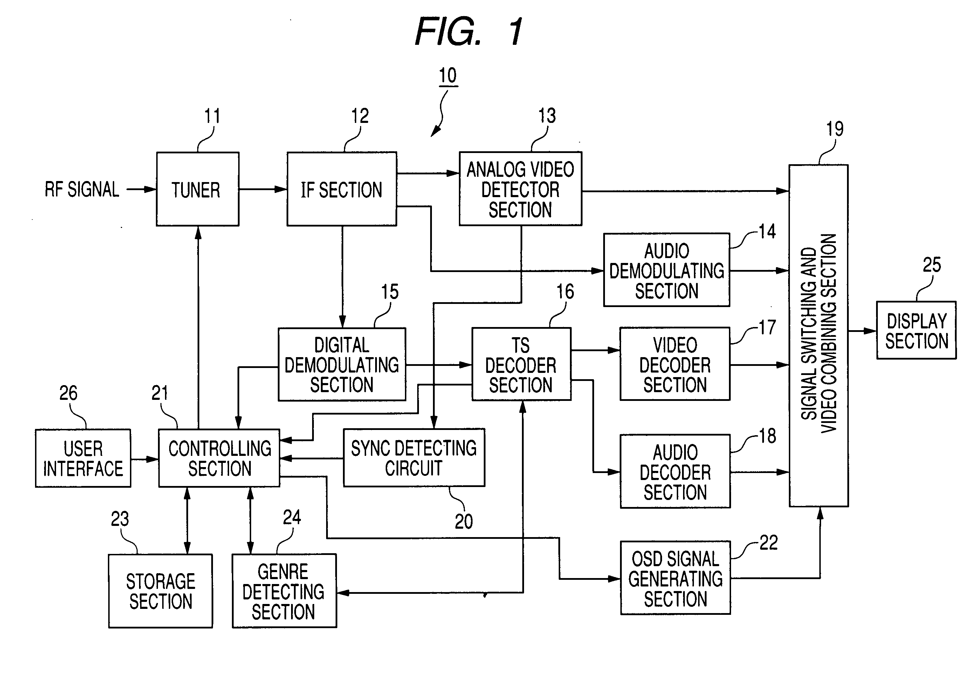

Fig. 1 shows a broadcast receiving apparatus 10 according to an embodiment of this invention. The broadcast receiving apparatus 10 is connected with a display section 25 including a display device. The display section 25 is of an external type with respect to the apparatus 10. The display section 25 may be contained in the apparatus 10.

The broadcast receiving apparatus 10 includes a tuner 11, an IF section 12, an analog video detector section 13, an audio demodulating section 14, a digital demodulating section 15, a TS (transport stream) decoder section 16, a video decoder section 17, an audio decoder section 18, a signal switching and video combining section 19, a sync detecting circuit 20, a controlling section 21, an OSD (on screen display) signal generating section 22, a storage section or a memory section 23, a genre detecting section 24, and a user interface 26.

The controlling section 21 can control the tuner 11. Furthermore, the controlling section 21 can control the OSD signal generating section 22, the storage section 23, and the genre detecting section 24. This control is a feature of the broadcast receiving apparatus 10.

RF (radio frequency) broadcast signals of terrestrial digital broadcasting and terrestrial analog broadcasting are caught by antennas (not shown). The caught RF broadcast signals are applied to the tuner 11 from the antennas. The controlling section 21 feeds the tuner 11 with a channel selection signal (channel selection data) representing a desired channel. The tuner 11 selects one from channels in the terrestrial digital broadcasting and the terrestrial analog broadcasting in accordance with the channel selection signal. The selected channel is the same as the desired channel represented by the channel selection signal. Since the controlling section 21 generates the channel selection signal, the controlling section 21 recognizes the selected channel. The tuner 11 converts an RF broadcast signal of the selected channel into a first IF (intermediate frequency) signal. The RF broadcast signal of the selected channel is also referred to as the selected and received RF broadcast signal. The tuner 11 outputs the first IF signal to the IF section 12.

The IF section 12 amplifies the first IF signal and limits the frequency band thereof to generate a second IF signal and an IF audio signal in prescribed frequency bands respectively. The IF section 12 feeds the second IF signal to the analog video detector section 13 and the digital demodulating section 15. The IF section 12 feeds the IF audio signal to the audio demodulating section 14.

When the currently selected and received RF broadcast signal is of the terrestrial analog broadcasting, the analog video detector section 13 subjects the second IF signal to video detection to recover a baseband video signal (a composite video signal). The analog video detector section 13 outputs the baseband video signal to the signal switching and video combining section 19 and the sync detecting circuit 20. The sync detecting circuit 20 detects sync signals in the baseband video signal. The sync detecting circuit 20 outputs the sync signals to the controlling section 21. The audio demodulating section 14 subjects the IF audio signal to audio demodulation to recover a baseband audio signal. The audio demodulating section 14 outputs the baseband audio signal to the signal switching and video combining section 19.

When the currently selected and received RF broadcast signal is of the terrestrial digital broadcasting, the digital demodulating section 15 subjects the second IF signal to digital demodulation to recover digital data in the form of a transport stream (TS). The digital demodulating section 15 feeds the digital data to the TS decoder section 16 and the controlling section 21. The TS decoder section 16 subjects the transport stream (the digital data) to a known decoding process to recover video data, audio data, and various broadcast information pieces. The broadcast information pieces include one representative of a service name of the currently-selected digital broadcasting channel. The broadcast information pieces also contain program information pieces assigned to respective content programs (broadcast programs) broadcasted or to be broadcasted via the currently-selected digital broadcasting channel. Each program information piece has the ID (for example, the name) of the related content program and a code word for the genre of the related content program, and hence denotes the relation between the related content program and the genre code word given thereto. Accordingly, the broadcast information pieces denote the relation among the currently-selected digital broadcasting channel, content programs broadcasted or to be broadcasted via the currently-selected digital broadcasting channel, and the genres of the foregoing content programs. The TS decoder section 16 outputs the video data and the audio data to the video decoder section 17 and the audio decoder section 18, respectively. The TS decoder section 16 outputs the broadcast information pieces to the controlling section 21. The TS decoder section 16 can output the broadcast information pieces (the genre code words) to the genre detecting section 24. The video decoder section 17 subjects the video data to a decoding process to generate an analog video signal. The video decoder section 17 outputs the analog video signal to the signal switching and video combining section 19. The audio decoder section 18 subjects the audio data to a decoding process to generate an analog audio signal. The audio decoder section 18 outputs the analog audio signal to the signal switching and video combining section 19.

When the currently selected and received RF broadcast signal is of the terrestrial analog broadcasting, the signal switching and video combining section 19 passes the baseband video signal and the baseband audio signal from the analog video detector section 13 and the audio demodulating section 14 to the display section 25. The display section 25 includes a display and loudspeakers. The baseband video signal is fed to the display so that a sequence of pictures represented by the baseband video signal will be indicated by the display. The baseband audio signal is fed to the loudspeakers so as to be converted into corresponding sounds. When the currently selected and received RF broadcast signal is of the terrestrial digital broadcasting, the signal switching and video combining section 19 passes the analog video signal and the analog audio signal from the video decoder section 17 and the audio decoder section 18 to the display section 25. The analog video signal is fed to the display in the display section 25 so that a sequence of pictures represented by the analog video signal will be indicated by the display. The analog audio signal is fed to the loudspeakers in the display section 25 so as to be converted into corresponding sounds.

The broadcast receiving apparatus 10 operates in a mode selectable from various modes including a broadcast receiving mode, a channel search mode, a channel-list indicating mode, and a channel-list editing mode. The user interface 26 can be actuated by the user. By actuating the user interface 26, the user can input various commands into the apparatus 10. Each inputted command is applied to the controlling section 21. The mode of operation of the apparatus 10 can be changed by the controlling section 21 in response to an inputted command.

During the channel search mode of operation of the apparatus 10, the controlling section 21 sends sequential channel selection data (sequential channel scan data) to the tuner 11 so that all channels in the terrestrial digital broadcasting and the terrestrial analog broadcasting will be sequentially selected and scanned. Some of the channels in the terrestrial digital broadcasting and the terrestrial analog broadcasting are used for broadcast while the other channels are not. The controlling section 21 decides whether or not the currently selected channel is used for broadcast on the basis of the sync signals outputted from the sync detecting circuit 20 and the digital data fed from the digital demodulating section 15. When the currently selected channel is decided to be used, the controlling section 21 implements the following actions. The controlling section 21 decides whether the currently selected and received RF broadcast signal is of the terrestrial analog broadcasting or the terrestrial digital broadcasting on the basis of the sync signals outputted from the sync detecting circuit 20 and the digital data fed from the digital demodulating section 15. When it is decided that the currently selected and received RF broadcast signal is of the terrestrial analog broadcasting, the controlling section 21 stores or writes, into the storage section 23, a frequency information piece (a physical channel information piece) representative of the analog broadcasting channel corresponding to the currently selected and received RF broadcast signal. When it is decided that the currently selected and received RF broadcast signal is of the terrestrial digital broadcasting, the controlling section 21 stores or writes, into the storage section 23, a frequency information piece (a channel information piece) representative of the digital broadcasting channel corresponding to the currently selected and received RF broadcast signal. Furthermore, the controlling section 21 stores or writes, into the storage section 23, the broadcast information piece (the service name information piece) outputted from the TS decoder section 16. At an end of the channel search mode of operation, the frequency information pieces and the broadcast information pieces are stored in the storage section 23 for used ones among all the channels in the terrestrial digital broadcasting and the terrestrial analog broadcasting.

During the channel-list indicating mode of operation of the apparatus 10, the controlling section 21 transfers the frequency information pieces and the broadcast information pieces from the storage section 23 to the OSD signal generating section 22. The controlling section 21 controls the OSD signal generating section 22 to generate an OSD signal from the frequency information pieces and the broadcast information pieces. The OSD signal represents a picture reflecting the contents of the frequency information pieces and the broadcast information pieces. The OSD signal generating section 22 outputs the OSD signal to the signal switching and video combining section 19. The signal switching and video combining section 19 adds the OSD signal to the current video signal to generate an OSD-signal-added video signal. The signal switching and video combining section 19 feeds the OSD-signal-added video signal to the display in the display section 25 so that the picture represented by the original video signal and the picture represented by the OSD signal will be indicated by the display on a separate-window basis or a superimposition basis. The signal switching and video combining section 19 may pass only the OSD signal to the display in the display section 25. In this case, only the picture represented by the OSD signal is indicated by the display.

The writing of the frequency information pieces and the broadcast information pieces into the storage section 23 by the controlling section 21 is designed so that the written frequency information pieces and the written broadcast information pieces in the storage section 23 will constitute channel-list information, that is, information representing a list of channels in the terrestrial analog broadcasting and the terrestrial digital broadcasting. The channel-list information is divided into segments assigned to the respective channels. Each of channel-list information segments assigned to the respective analog broadcasting channels has a frequency information piece (a physical channel information piece). Each of channel-list information segments assigned to the respective digital broadcasting channels has a frequency information piece (a channel information piece) and a broadcast information piece (a service name information piece).

The channel-list information can be transferred from the storage section 23 to the display in the display section 25 via the controlling section 21, the OSD signal generating section 22, and the signal switching and video combining section 19. Accordingly, the channel list can be indicated by the display.

A favourite (favorite) list can be defined within the channel list. The favourite list is of favourite channels chosen from the channels in the channel list. Favourite-list information, that is, information representing the favourite list, can be stored in the storage section 23. The favourite-list information can be fed to the display in the display section 25. Accordingly, the favourite list can be indicated by the display. The indicated favourite list is denoted by predetermined marks added to the indicated channel list.

The user interface 26, the controlling section 21, the OSD signal generating section 22, and the display section 25 may be designed to form a GUI (graphical user interface) system.

Each of content programs broadcasted or to be broadcasted via the used digital broadcasting channels is in one among different genres including "kids", "news", "leisure", "education", and "general". Different words of a genre code are assigned to the different genres, respectively. Program information pieces are assigned to content programs, respectively. Each program information piece has the ID (for example, the name) of the related content program and a code word for the genre of the related content program, and hence denotes the relation between the related content program and the genre code word given thereto. The program information pieces are transmitted as ones among broadcast information pieces via the used digital broadcasting channels.

The user can select one from the genres by actuating the user interface 26 and thereby inputting a genre selection signal to the controlling section 21. The genre selection signal represents the genre selected by the user. In response to the genre selection signal, the controlling section 21 accesses the channel list in the storage section 23 and detects all the digital broadcasting channels in the channel list. The controlling section 21 controls the tuner 11 so that the detected digital broadcasting channels will be sequentially selected and scanned. During the sequential channel selection and scan, the controlling section 21 controls the genre detecting section 24 to fetch recovered genre code words from the TS decoder section 16 and check the recovered genre code words. Specifically, the controlling section 21 notifies the genre detecting section 24 of the selected genre represented by the genre selection signal. Under the control by the controlling section 21, the genre detecting section 24 decides whether or not each recovered genre code word corresponds to the selected genre. When the recovered genre code word corresponds to the selected genre, the genre detecting section 24 is controlled to detect the ID of a content program in the selected genre by referring to the related program information piece recovered by the TS decoder section 16. In this way, the genre detecting section 24 detects the IDs of content programs in the selected genre while being controlled by the controlling section 21. The detected IDs of content programs in the selected genre are notified to the controlling section 21. The controlling section 21 identifies the digital broadcasting channels via which the content programs in the selected genre are broadcasted or to be broadcasted. The controlling section 21 instructs the OSD signal generating section 22 to generate an OSD signal representing a picture indicative of the identified digital broadcasting channels.

The controlling section 21 can access the storage section 23 and control the OSD signal generating section 22 in response to the frequency information pieces and the broadcast information pieces in the storage section 23 to generate an OSD signal representing a picture having a first portion showing the channel list (the list of the used channels in the terrestrial analog broadcasting and the terrestrial digital broadcasting) and second portions showing selection inputting buttons. The selection inputting buttons include a genre selecting button and a favourite (favorite) registering button. The generated OSD signal is transmitted from the OSD signal generating section 22 to the display section 25 via the signal switching and video combining section 19 so that the picture represented by the OSD signal is indicated by the display section 25. The indicated picture shows the channel list and the selection inputting buttons (the genre selecting button and the favourite registering button). When the genre selecting button is chosen in the indicated picture by actuating the user interface 26, the controlling section 21 controls the OSD signal generating section 22 to generate an OSD signal representing a picture having a first portion showing the channel list, second portions showing the selection inputting buttons, and a third portion showing a list of predetermined genres. The generated OSD signal is transmitted from the OSD signal generating section 22 to the display section 25 via the signal switching and video combining section 19 so that the picture represented by the OSD signal is indicated by the display section 25. The indicated picture shows the genre list in addition to the channel list and the selection inputting buttons.

The terrestrial analog broadcasting is assigned to one of the predetermined genres. Specifically, the terrestrial analog broadcasting is regarded as being in a genre "analog".

The controlling section 21 includes a microcomputer or a similar programmable device having a combination of an input/ output port, a processing unit, a ROM, and a RAM. The controlling section 21 operates in accordance with a computer program stored in the ROM or the RAM.

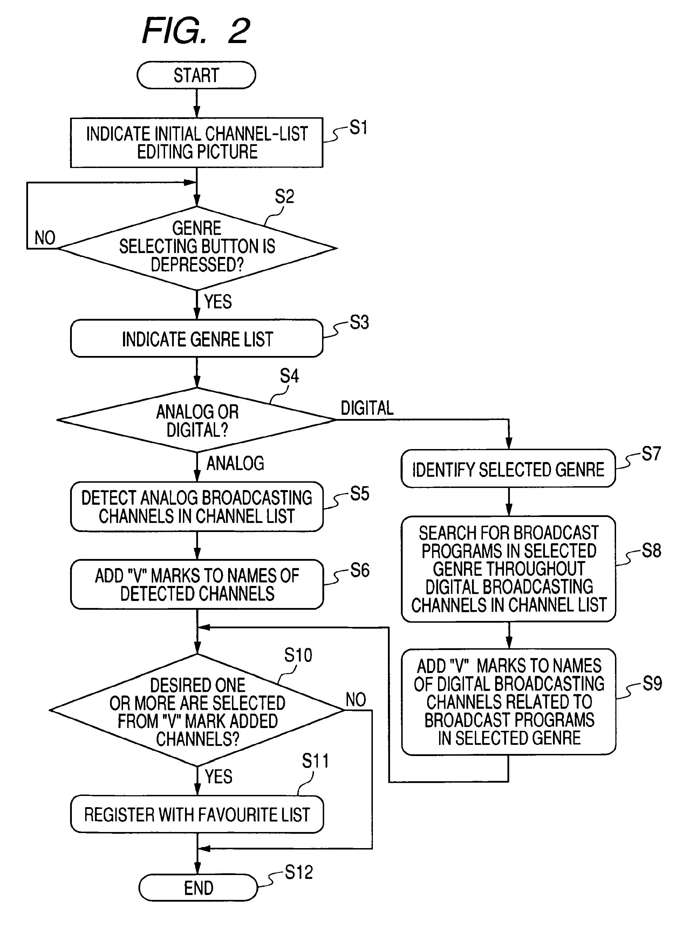

Fig. 2 is a flowchart of a segment of the computer program for the controlling section 21. With reference to Fig. 2, a first step S1 in the computer program segment accesses the storage section 23 and controls the OSD signal generating section 22 to generate an OSD signal representing an initial picture for a channel-list editing process. The generated OSD signal is transmitted from the OSD signal generating section 22 to the display section 25 via the signal switching and video combining section 19 so that the initial channel-list editing picture represented by the OSD signal is indicated by the display section 25. After the step S1, the computer program advances to a step S2.

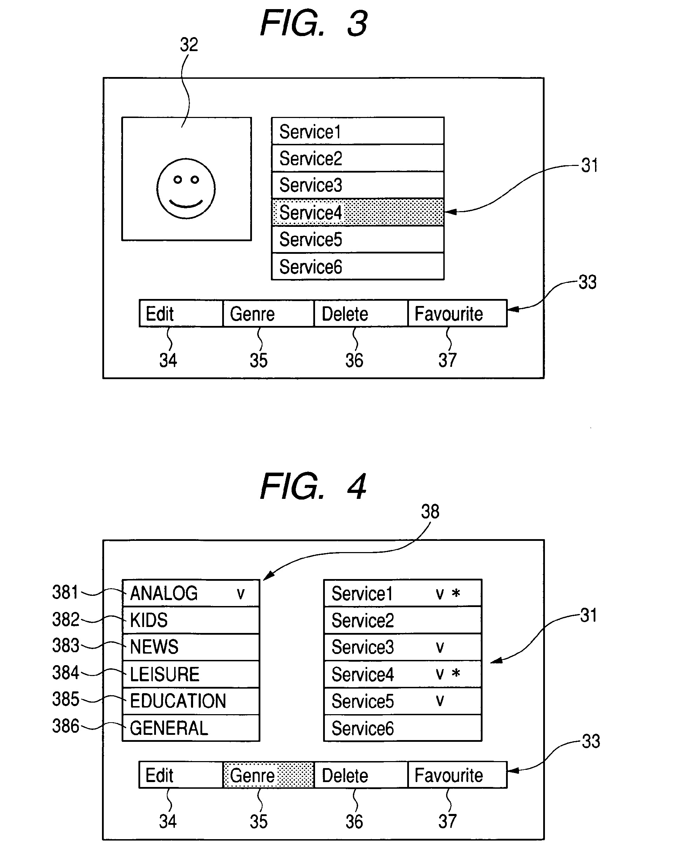

As shown in Fig. 3, the initial channel-list editing picture indicated by the display section 25 has a right and central area showing a channel list 31, a left area having a window 32, a lower area showing a function selecting list 33. The previously-implemented channel search mode of operation of the apparatus 10 causes the storage section 23 to store the physical channel information pieces about the analog broadcasting channels, and the frequency information pieces and the service name information pieces about the digital broadcasting channels. Regarding the channel list 31, the step S1 (the controlling section 21) reads these information pieces from the storage section 23 and controls the OSD signal generating section 22 in response to the read information pieces to generate the channel-list-corresponding portion of the OSD signal. The channel list 31 in Fig. 3 shows the names "Service 1" to "Service2" of the analog broadcasting channels and the digital broadcasting channels. The names mean channel ID numbers and channel service names. In the channel list 31, the names of the analog broadcasting channels are mixed with those of the digital broadcasting channels.

One can be selected from the channels in the list 31 by actuating the user interface 26. The controlling section 21 recognizes the selected channel. The controlling section 21 controls the OSD signal generating section 22 so that the name of the selected channel will have a preset color different from the color of the names of the other channels in the list 31. Furthermore, the controlling section 21 controls the tuner 11 to pick up the selected channel from the digital broadcasting channels and the analog broadcasting channels. The content program currently broadcasted via the selected channel is indicated by the widow 32 in Fig. 3.

As shown in Fig. 3, the function selecting list 33 consists of an editing selecting button 34, a genre selecting button 35, a deletion selecting button 36, and a favourite registering button 37. The editing selecting button 34 is chosen and used when the channel list 31 is required to be edited. The deleting selecting button 36 is chosen and used for deleting at least one of the channels from the list 31. The favourite registering button 37 is chosen and used for registering a channel or channels with the favourite list while focus on the channel list 31 is provided.

The user interface 26 includes, for example, a remote control device having upward, downward, leftward, and rightward movement cursor keys and color keys. The user can choose or virtually depress the genre selecting button 35 by operating the cursor keys or the color keys. A command corresponding to the virtual depression (the choice) of the genre selecting button 35 is fed to the controlling section 21 from the user interface 26. The controlling section 21 responds to the virtual depression of the genre selecting button 35.

The step S2 in Fig. 2 decides whether or not the genre selecting button 35 is virtually depressed on the basis of a command fed from the user interface 26. When the step S2 decides that the genre selecting button 35 is virtually depressed, the computer program advances from the step S2 to a step S3. Otherwise, the step S2 is executed again.

The step S3 accesses the storage section 23 and controls the OSD signal generating section 22 to generate an OSD signal representing a non-initial picture for the channel-list editing process. The generated OSD signal is transmitted from the OSD signal generating section 22 to the display section 25 via the signal switching and video combining section 19 so that the non-initial channel-list editing picture represented by the OSD signal is indicated by the display section 25. Thus, on the display section 25, the initial channel-list editing picture is replaced by the non-initial channel-list editing picture. The non-initial channel-list editing picture is similar to the initial channel-list editing picture except that the non-initial channel-list editing picture has a portion showing the genre list and lacks a portion for the window 32.

As shown in Fig. 4, the non-initial channel-list editing picture indicated by the display section 25 has a left area showing a genre list 38 which replaces the window 32 (see Fig. 3). The list 38 has six genres, that is, an "analog" genre 381, a "kids" genre 382, a "news" genre 383, a "leisure" genre 384, an "education" genre 385, and a "general" genre 386. The "analog" genre 381 is assigned to the terrestrial analog broadcasting. The other genres 382-386 correspond to genre code words contained in broadcast signals of the terrestrial digital broadcasting.

The non-initial channel-list editing picture in Fig. 4 reflects the virtual depression of the genre selecting button 35. Specifically, the genre selecting button 35 has a preset color different from the color of the other buttons 34, 36, and 37 in the function selecting list 33 so that the virtual depression of the genre selecting button 35 can be clearly notified to the user.

The user can select one from the genres 381-386 in the list 38 by actuating the user interface 26. A command corresponding to the selected genre is fed to the controlling section 21 from the user interface 26. The controlling section 21 responds to the selected genre.

With reference back to Fig. 2, a step S4 following the step S3 decides whether the "analog" genre 381 is selected or one of the other genres 382-386 is selected. When it is decided that the "analog" genre 381 is selected, the computer program advances from the step S4 to a step S5. When it is decided that one of the genres 382-386 is selected, the computer program advances from the step S4 to a step S7.

The step S5 detects the analog broadcasting channels in the channel list 31 by referring to the frequency information pieces stored in the storage section 23.

A step S6 subsequent to the step S5 controls the OSD signal generating section 22 so that "v" marks will be added only to the names of the detected analog broadcasting channels in the indicated list 31 respectively. Thus, the "v" marks are added to regions in the indicated list 31, where the regions correspond to the detected analog broadcasting channels respectively. The added "v" marks enable the user to discriminate the analog broadcasting channels from the digital broadcasting channels in the indicated list 31 although the names of the analog broadcasting channels are mixed with those of the digital broadcasting channels therein. In Fig. 4, the "v" marks are added to the channel names "Service1", "Service3", "Service4", and "Service5". Furthermore, the step S6 controls the OSD signal generating section 22 so that a "v" mark will be added only to the "analog" genre 381 in the indicated list 38 (see Fig. 4). After the step S6, the computer program advances to a step S10.

When the step S4 decides that one of the genres 382-386 is selected, the computer program advances from the step S4 to the step S7. A command corresponding to the selected genre is fed to the controlling section 21 from the user interface 26. The controlling section 21 responds to the selected genre.

The step S7 identifies the selected genre among the genres 382-386 in the indicated list 38.

A step S8 following the step S7 refers to the channel-list-related information pieces in the storage section 23 and controls the tuner 11 so that all the digital broadcasting channels in the indicated list 31 will be sequentially selected and scanned. The step S8 controls the genre detecting section 24 to fetch recovered genre code words from the TS decoder section 16 and check the recovered genre code words. Specifically, the step S8 notifies the genre detecting section 24 of the selected genre (the identified genre). The step S8 controls the genre detecting section 24 to decide whether or not each recovered genre code word corresponds to the selected genre. When the recovered genre code word corresponds to the selected genre, the step S8 controls the genre detecting section 24 to detect the ID of a content program in the selected genre by referring to the related program information piece recovered by the TS decoder section 16. In this way, the genre detecting section 24 detects the IDs of content programs in the selected genre while being controlled by the step S8. Accordingly, the step S8 controls the genre detecting section 24 to search content programs of all the digital broadcasting channels for ones in the selected genre. The step S8 fetches the detected IDs of the content programs in the selected genre from the genre detecting section 24.

A step S9 subsequent to the step S8 identifies the digital broadcasting channels via which the content programs in the selected genre are broadcasted or to be broadcasted. The step S9 controls the OSD signal generating section 22 so that "v" marks will be added only to the names of the identified digital broadcasting channels in the indicated list 31 respectively. Thus, the "v" marks are added to areas in the indicated list 31, where the areas correspond to the identified digital broadcasting channels respectively. Alternatively, the step S9 may control the OSD signal generating section 22 so that the channels except the identified digital broadcasting channels will be removed from the indicated list 31 by filtering and hence the indicated list 31 will have the identified digital broadcasting channels only. After the step S9, the computer program advances to the step S 10.

The user can register a desired channel or channels with the favourite list (the list of favourite channels) by actuating the user interface 26. This registration is implemented as follows. First, the user chooses one or more from the "v"-mark-added broadcasting channels in the indicated channel list 31 as a desired channel or channels by actuating the user interface 26. A command or commands corresponding to the desired channel or channels are fed to the controlling section 21 from the user interface 26. The controlling section 21 responds to the desired channel or channels. Second, the user registers the desired channel or channels with the favourite list by actuating the user interface 26 to choose or virtually depress the favourite registering button 37. A command corresponding to the virtual depression (the choice) of the favourite registering button 37 is fed to the controlling section 21 from the user interface 26. The controlling section 21 responds to the virtual depression of the favourite registering button 37.

The step S10 in Fig. 2 decides whether or not one or more are chosen from the "v"-mark-added broadcasting channels in the indicated channel list 31 as a desired channel or channels, and then the favourite registering button 37 is virtually depressed. When it is decided that one or more are chosen from the "v"-mark-added broadcasting channels as a desired channel or channels and then the favourite registering button 37 is virtually depressed, the computer program advances from the step S10 to a step S11. Otherwise, the computer program exits from the step S10, and then the current execution cycle of the computer program segment ends.

The step S 11 registers the desired channel or channels with the favourite list. Preferably, the step S 11 stores information representative of the resultant favourite list (the updated or renewed favourite list) into the storage section 23. Specifically, the step S11 controls the OSD signal generating section 22 so that a "*" mark or marks will be added only to the name or names of the chosen broadcasting channels in the indicated list 31 respectively. In Fig. 4, the "*" marks are added to the channel names "Service1" and "Service4". The added "*" marks represent that the related broadcasting channels are members of the favourite list. After the step S11, the current execution cycle of the computer program segment ends.

The signal processing which corresponds to the computer program segment in Fig. 2 can be implemented by only basic blocks in the broadcast receiving apparatus 10. Thus, it is unnecessary to additionally provide a special circuit or a special signal processing block for the implementation of the above signal processing. Accordingly, the broadcast receiving apparatus 10 can be inexpensive.

The channel-list editing picture in Fig. 4 which contains the channel list 31 and the genre list 38 can be indicated by the display section 25. The user can easily select one from the genres in the list 38 while monitoring the channel-list editing picture. The "v" marks are automatically added only to the names of broadcasting channels in the list 31 via which content programs in the selected genre are broadcasted or to be broadcasted. The user can easily register a desired channel or channels among the "v"-mark-added broadcasting channels in the list 31 with the favourite list while monitoring the channel-list editing picture.

One of the members in the genre list 38 is the "analog" genre 381 assigned to the terrestrial analog broadcasting. Not only digital broadcasting channels but also analog broadcasting channels can be registered with the channel list 31. Generally, in the channel list 31, the names of the digital broadcasting channels are mixed with those of the analog broadcasting channels. When the user selects the "analog" genre from the list 38, the "v" marks are automatically added only to the names of the analog broadcasting channels in the list 31. The user can easily register a desired channel or channels among the "v"-mark-added analog broadcasting channels in the list 31 with the favourite list. In this case, the added "v" marks enable the user to discriminate the analog broadcasting channels from the digital broadcasting channels in the list 31 although the names of the analog broadcasting channels are mixed with those of the digital broadcasting channels therein.

The "v" marks may be replaced by other marks. The addition of the "v" marks to the names of the target channels in the list 31 may be replaced by making the color of the names of the target channels different from that of the names of the other channels in the list 31. The addition of the "v" marks to the names of the target channels in the list 31 may be replaced by a filtering process which keeps the names of the target channels in the indicated list 31 and erases the names of the other channels therefrom.

The broadcast receiving apparatus 10 may be modified to accept broadcast signals of the terrestrial digital broadcasting only.

## Claims

1. A broadcast receiving apparatus comprising:
first means for storing channel information about channels;
second means for indicating a first picture on the basis of the stored channel information, the first picture containing a list of the channels, a genre selecting button, and a favourite registering button;
third means for indicating a second picture when the genre selecting button is chosen, the second picture containing a list of genres, the list of the channels, and the favourite registering button;
fourth means for sequentially receiving broadcast signals in the channels in the channel list and obtaining genre information pieces from the received broadcast signals when one is selected from the genres in the genre list, the genre information pieces representing genres of content programs broadcasted or to be broadcasted via the channels;
fifth means for detecting ones among the channels in the channel list in response to the genre information pieces, the detected channels being used to broadcast content programs in the selected genre;
sixth means for adding predetermined marks to regions in the channel list, the regions corresponding to the detected channels respectively; and
seventh means for, when at least one is chosen from the detected channels in the channel list and the favourite registering button is chosen, registering the chosen channel with a list of favourite channels.

2. A broadcast receiving apparatus according to claim 1, wherein the channels include digital broadcasting channels and analog broadcasting channels, and one of the genres in the genre list is assigned to the analog broadcasting channels, and further comprising eighth means for, when the genre assigned to the analog broadcasting channels is selected from the genre list, adding predetermined marks to areas in the channel list, the areas corresponding to the analog broadcast channels respectively.
